# DEMANDE DE BREVET EUROPEEN

(11) **EP 1 998 532 A1**
(43) Date de publication de la demande: **03.12.2008**
(21) Numéro de dépôt: 08290479.8
(22) Date de dépôt: 26.05.2008
(51) Int. Cl.: H04L 29/06

(54) **Système d'agrégation de services pour une plateforme de télécommunication**

(30) Priorité: 01.06.2007 FR 0755428
(71) Demandeur: Continental Automotive France, 31100 Toulouse (FR)
(72) Inventeur: Sayn, Anthony, 06810 Auribeau/Siagne (FR); Gaborit, David, 06530 Le Tignet (FR); Carion, Jean-Philippe, 06250 Mougins (FR); Clausse, Julien, 06650 Opio (FR)
(74) Mandataire: Bloch, Gérard

(57) **Abrégé**

L'invention concerne un système d'agrégation de services pour une plateforme de télécommunication (100) comprenant :
- un serveur (10) d'administration de données comprenant un module (11) de gestion des requêtes, un module (12) d'analyse des requêtes recevant des données ciblées (D4) et des requêtes (R) du module de gestion des requêtes (11) et transmettant l'ensemble des données (D4, R) à des serveurs de fourniture de données de service non concernés (S1, S2, S3) auxquels les requêtes (R) ne sont pas destinées, lesdits serveurs non concernés (S1, S2, S3) fournissant en réponse des données additionnelles (D1, D2, D3) qui sont agrégées par le module de gestion des requêtes (11), l'ensemble des données (D1, D2, D3, D4) étant ensuite transmis à la plateforme de télécommunication (100) par le module de gestion des requêtes (11).

## Description

L'invention concerne le domaine des communications entre un serveur fournisseur de services et un système de télécommunication. L'invention concerne plus particulièrement un système embarqué dans un véhicule automobile se connectant à des services distants via une liaison de télécommunication sans fil.

Les véhicules automobiles peuvent requérir des informations lors de la conduite en faisant appel à des services. Par exemple, un individu dans son automobile peut requérir l'état du trafic ainsi que les conditions climatiques tout en conduisant. Requérir des informations via un service nécessite un moyen de communication sans fil afin de permettre au véhicule de se déplacer tout en recevant les informations. De manière classique, des communications satellitaires, téléphoniques, radio ou WIFI permettent de transmettre des informations au véhicule.

Grâce à ces divers média d'informations, le conducteur peut faire appel à différents services via le système embarqué du véhicule afin de connaître le meilleur itinéraire, les conditions climatiques ou commander des biens et des services afin de faciliter son voyage (réservation de table dans un restaurant, réservation d'une chambre d'hôtel, etc.).

Les systèmes de communication existants ne sont pas bien adaptés, car ils nécessitent que le conducteur entre un grand nombre de paramètres dans le système embarqué afin d'obtenir l'information désirée. Ainsi, si le conducteur du véhicule souhaite réserver une chambre d'hôtel dans une ville située à mi-parcours de son itinéraire, il doit réaliser de nombreuses requêtes. Il doit, tout d'abord, saisir les noms des villes de départ et d'arrivée afin de requérir son itinéraire auprès d'un premier service. Il doit ensuite analyser cet itinéraire afin de définir quelle est la ville située à mi-parcours. Il doit ensuite faire appel à un deuxième service afin de rentrer le nom de la ville et obtenir les coordonnées des hôtels dans ladite ville. Il doit enfin saisir son téléphone et réserver une chambre, en indiquant, par exemple, les informations de sa carte bancaire.

Une telle gestion des services dans un véhicule est inadaptée et même dangereuse. Les nombreuses saisies de paramètres entraînent une baisse de l'attention du conducteur et donc une augmentation des risques d'accident. Il est alors nécessaire que le conducteur soit à l'arrêt pour consulter les services, ce qui allonge la durée de son voyage.

Requérir une information est long, voire laborieux, ce qui dissuade un conducteur de consulter des services. De surcroît, celui-ci est contraint de souscrire à différents abonnements de services afin d'obtenir les informations désirées, entraînant la répétition d'étapes relatives à son identification et au paiement. Un tel système de gestion de services est lent, peu pratique et requiert une attention poussée. Il présente ainsi peu d'intérêt pour un utilisateur.

L'invention de la présente demande vise à pallier ces inconvénients.

A cet effet, elle concerne un système d'agrégation de services pour une plateforme de télécommunication comprenant :
- un serveur d'administration de données relié à des serveur de fourniture de données de service, l'ensemble des serveurs formant une étoile comprenant un centre formé par le serveur d'administration et des branches formées entre le serveur d'administration et les serveurs de fourniture de données de service;
- ledit serveur d'administration comprenant un module de gestion des requêtes agencé pour recevoir des requêtes issues de la plateforme de télécommunication et les transmettre au serveur de fourniture de données de service concerné auquel les requêtes sont destinées, ledit serveur de fourniture de données de service concerné fournissant en réponse aux requêtes des données ciblées;
- ledit serveur d'administration comprenant un module d'analyse des requêtes, recevant les données ciblées et les requêtes du module de gestion des requêtes et transmettant l'ensemble des données à des serveurs de fourniture de données de service non concernés auxquels les requêtes ne sont pas destinées,
- lesdits serveurs non concernés fournissant en réponse des données additionnelles qui sont agrégées par le module de gestion des requêtes, l'ensemble des données étant ensuite transmis à la plateforme de télécommunication par le module de gestion des requêtes.

Lorsqu'un conducteur envoie une requête pour obtenir une information, des informations additionnelles lui sont proposées évitant, peut-être ainsi, à ce dernier de réaliser de nombreuses requêtes. La disposition étoilée du réseau, formé par les serveurs, permet avantageusement de regrouper les informations émises par la plateforme de télécommunication, évitant ainsi de dupliquer inutilement les requêtes pour accéder à chacun des services.

On entend par agrégation de données, une combinaison de données qui interagissent les unes avec les autres pour s'enrichir mutuellement par synergie. Une agrégation s'oppose à une juxtaposition ou à un regroupement de données.

De préférence, lesdits serveurs non concernés sont agencés pour filtrer les données ciblées reçues afin d'en extraire les paramètres pour lesquels les serveurs non concernés peuvent fournir des données additionnelles en réponse.

De préférence, le module de gestion des requêtes est agencé pour intégrer les données additionnelles aux données ciblées afin d'enrichir les données ciblées.

Les données additionnelles sont donc des données dynamiques qui dépendent des données ciblées fournies par le serveur de fourniture de données. Cela s'oppose aux portails de données pour lesquels des données présélectionnées ou statiques sont transmis au conducteur.

De préférence, le serveur d'administration comprend un module de personnalisation du conducteur agencé pour filtrer et enrichir la transmission des requêtes vers les serveurs et lui proposer ainsi des services préférentiels.

De préférence encore, le module de personnalisation du conducteur comprend une base de données de paramètres préférentiels, le module de personnalisation du conducteur extrayant les paramètres préférentiels des requêtes pour les stocker dans la base de données de paramètres préférentiels.

De préférence, le serveur d'administration comprend un module d'identification permettant de contrôler l'accès aux différents serveurs de fourniture de service.

De préférence encore, le module d'identification comprend un module de facturation permettant de contrôler la facturation des différents serveurs de fourniture de service, le module de facturation étant mis en relation avec un serveur de fourniture de service de participation agencé pour prendre à sa charge le coût d'accès à un serveur de fourniture de service.

De préférence toujours, le module de gestion des requêtes envoie les données additionnelles retournées par le serveur de fourniture de service, au serveur de fourniture de service de participation.

De préférence toujours, le serveur de fourniture de service de participation retourne des données ciblées participatives qui sont agrégées par le module de gestion des requêtes.

De préférence toujours, les données ciblées participatives sont des données commerciales.

Dans la forme la plus avantageuse du système d'agrégation de l'invention, la plateforme de télécommunication est une plateforme mobile.

L'invention sera mieux comprise à l'aide de la description suivante et du dessin annexé sur lequel :
- la figure 1 représente le serveur d'administration et les serveurs de fourniture de service formant un réseau étoilé dont le serveur d'administration est le centre ;
- la figure 2 représente un diagramme de l'interaction des modules du serveur d'administration avec les serveurs de fourniture de service de la figure 1 ;
- la figure 3 représente une autre forme de réalisation du serveur d'administration de l'invention avec un module de personnalisation ; et
- la figure 4 représente une autre forme de réalisation du serveur d'administration de l'invention avec un module d'identification et de facturation;

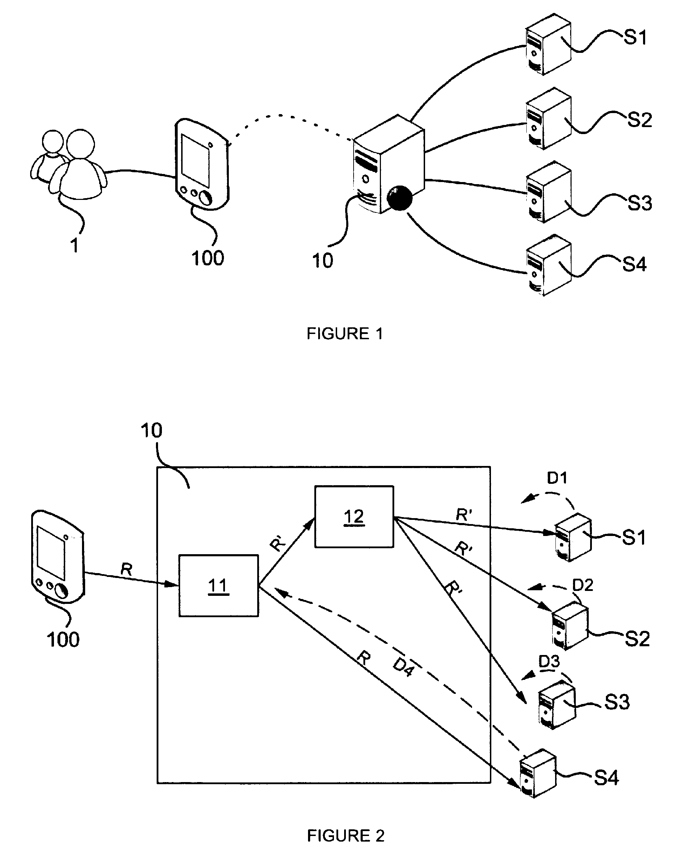

L'invention concerne la communication entre une plateforme de télécommunication 100, qui est ici une plateforme mobile, disposée dans une automobile, et des serveurs de fourniture de service S1-S4, représentés sur la figure 1. Dans cet exemple de mise en oeuvre de l'invention, la plateforme de télécommunication mobile 100 se présente sous la forme d'un téléphone cellulaire mobile 100, un conducteur de l'automobile 1 manipulant son téléphone 100 afin d'accéder à des services.

Le téléphone mobile 100 peut comprendre, outre un organe usuel de mise en relation de terminaux via le réseau téléphonique, un organe de communication du type WIFI, BLUETOOTH ou radio lui permettant d'accéder à de nombreux services.

Dans cet exemple, le conducteur 1 accède aux différents services via le réseau téléphonique auquel un abonnement est souscrit. On suppose, par souci de clarté, que l'abonné et le conducteur 1 de l'automobile sont les mêmes personnes. Afin d'accéder aux différents services, le conducteur 1 envoie des requêtes R via le réseau téléphonique à un serveur d'administration 10, le serveur d'administration 10 traitant les requêtes R.

En référence à la figure 2, le serveur d'administration 10 est relié, de manière filaire ou sans fil, à des serveurs de fourniture de service S1-S4, ces derniers recevant des requêtes R' issues du serveur d'administration 10, les requêtes R' étant identiques aux requêtes R ou modifiées à partir desdites requêtes R. Ainsi, toute requête R, envoyée par le téléphone mobile 100, est relayée par le serveur d'administration 10 avant d'atteindre un serveur de fourniture de service S1-S4.

Un serveur de fourniture de service S1-S4 se présente ici sous la forme d'un serveur fournissant des données en réponse à une requête, les données fournies étant différentes selon la nature de la requête (lieu géographique, valeur boursière, nom de magasin, etc.). Lorsque la requête n'est pas adaptée au serveur de fourniture de service qui la reçoit, ledit serveur ne fournit pas de données en réponse. Autrement dit, le serveur de fourniture de données filtre la requête reçue pour extraire de cette requête les paramètres pour lesquels le serveur peut fournir des données. Ainsi, pour un serveur de météorologie, la requête qui lui est adressée doit comprendre au moins un lieu géographique (nom de ville, adresse, coordonnées géographiques, etc.) pour obtenir des conditions météorologiques audit lieu géographique. Le serveur de météorologie ne fournit pas de donnée en réponse à une valeur boursière.

Le serveur d'administration 10 est le centre d'un réseau formé par les serveurs de fourniture de service S1-S4 et le serveur d'administration 10. Le réseau est appelé réseau étoilé en opposition aux réseaux, dits parallèles, dans lesquels un serveur de gestion est disposé entre le téléphone 100 et chaque serveur de fourniture de service S1-S4, le serveur de gestion assurant séparément l'identification de l'abonné au service auquel il accède.

Le serveur d'administration 10 comprend un module de gestion des requêtes 11 agencé pour recevoir des requêtes R issues du téléphone mobile 100 et les transmettre au serveur de fourniture de données de service concerné, ici et par exemple le serveur S4. Dans l'exemple suivant, on se limitera à expliciter le traitement d'une unique requête R.

La destination de la requête R peut être déterminée lors de son envoi par le conducteur 1, le conducteur 1 spécifiant qu'il souhaite, par exemple, accéder à un service de navigation. A l'arrivée de la requête R au module de gestion 11, la requête R est dirigée vers le serveur de fourniture de service S4 auquel elle est destinée.

Il va de soi que la destination de la requête R peut être également déterminée par une analyse contextuelle, le conducteur 1 rentrant uniquement le nom d'une ville pour que le serveur d'administration 10 propose, via un serveur de fourniture de service, un itinéraire jusqu'à ladite ville.

Le serveur de fourniture de service S4 réceptionne la requête R et retourne des données ciblées D4 au module de gestion des requêtes 11.

Une fois les données ciblées D4 reçues par le module de gestion des requêtes 11, celui-ci transmet ladite requête R et les données ciblées D4 à un module 12 d'analyse des requêtes situé dans le serveur d'administration 10 et relié au module de gestion des requêtes 11, l'ensemble des données D4 et de la requête R étant référencé R' sur la figure 2.

Le module 12 d'analyse des requêtes réceptionne les données R' et les transmet aux serveurs de fourniture de données de service non concernés S1-S3. Chaque serveur de fourniture de service S1-S3, après réception des données R', filtre les données R' afin d'extraire les paramètres pour lesquels le serveur peut retourner des données additionnelles D1 - D3 en réponse, l'ensemble de ces données additionnelles D1 - D3 étant transmises au module de gestion des requêtes 11.

Les données additionnelles D1 - D3 sont intégrées aux données ciblées D4 afin de les enrichir.

L'ensemble des données D1-D4 est ensuite transmis par ledit module de gestion des requêtes 11 au téléphone mobile 100 pour être communiqué au conducteur 1 par voie sonore (ordres vocaux) ou visuelle (affichage d'images sur le téléphone mobile 100). Le conducteur bénéficie ainsi de données additionnelles D1-D3, qu'il n'a pas demandé, lors de la consultation des données ciblées D4 sur son téléphone 100.

Le système d'agrégation de services de l'invention va maintenant être explicité à l'aide d'un exemple de mise en oeuvre.

Le conducteur 1 du véhicule automobile souhaite se rendre d'une ville A à une ville B. Le conducteur envoie une requête d'itinéraire R au serveur d'administration 10, en précisant les noms des villes A et B, au moyen de son téléphone mobile 100 et via le réseau téléphonique. Le module de gestion des messages 11 traite la requête R et détermine à quel serveur elle est destinée.

Dans cet exemple, la requête R est destinée à un serveur de navigation S4. Le serveur de navigation S4, en réponse à la requête R, retourne des données ciblées D4 comprenant un ensemble d'images et de fichiers sonores correspondant, respectivement, aux plans schématisés de l'itinéraire entre la ville A et la ville B et aux directions que le conducteur 1 doit prendre au cours du trajet (gauche, droite, tout droit ...). Les données D4 comprennent également différentes coordonnées géographiques de l'itinéraire avec l'horaire d'arrivée escompté auxdites coordonnées.

Après avoir reçu les données ciblées D4, le module de gestion des requêtes 11 transmet la requête R, avec les données ciblées D4 (données R'), au module 12 d'analyse des requêtes. Les données R' sont transmises à un autre serveur de fourniture de service S3 qui les filtre pour extraire les paramètres pour lesquels le serveur S3 peut fournir des données en réponse. Dans cet exemple, ledit serveur S3 extrait, comme paramètres, les coordonnées géographiques de l'itinéraire qui sont appariées avec l'horaire d'arrivée escompté auxdites coordonnées, le serveur de fourniture de service S3 étant capable de fournir les conditions météorologiques en des coordonnées géographiques déterminées pour une plage horaire déterminée. Le serveur de service météorologique S3 retourne un ensemble de données additionnelles D3 au module de gestion des requêtes 11. Les données additionnelles D3 correspondent aux conditions météorologiques pour chaque couple de données géographiques et temporelles retourné par le service de navigation S4. Le module de gestion des requêtes 11 agrège les données ciblées D4, ici un itinéraire, avec les données additionnelles D3, les conditions météorologiques lelong dudit itinéraire. Ainsi, le conducteur 1, en consultant son téléphone 100, est informé que les conditions météorologiques sont clémentes aux environs de la ville A mais se dégradent à mi-parcours.

L'ensemble des données ciblées D4 et additionnelles D3 sont ensuite envoyées au téléphone mobile 100 par le module de gestion des requêtes 11. Ainsi, le conducteur 1 reçoit, via son téléphone mobile 100, son itinéraire entre les villes A et B et les conditions météorologiques le long du trajet. Cela permet au conducteur 1, de manière avantageuse, d'équiper son véhicule avec des pneus adaptés aux conditions météorologiques.

Le module 12 d'analyse des requêtes peut également transmettre les données ciblées D4 avec la requête R à plusieurs serveurs de fourniture de service S1-S3, chaque serveur S1-S3 réalisant son propre filtrage des données reçues pour en extraire les paramètres pour lesquels les serveurs S1-S3 peuvent fournir des données en réponse. De même, le module 12 d'analyse des requêtes peut filtrer les données transmises aux serveurs de fourniture de service, par exemple, en bloquant une partie des données ciblées D4, telles que les plans schématisés de l'itinéraire entre la ville A et la ville B et les directions que le conducteur 1 doit prendre au cours du trajet. Le filtrage des données R', envoyées aux serveurs non concernés S1-S3 pour en extraire les paramètres pour lesquels les serveurs S1-S3 peuvent fournir des données en réponse, peut ainsi être également réalisé par le module d'analyse des requêtes 12. Cela permet avantageusement de limiter la transmission de données non pertinentes vers les serveurs non concernés S1-S3.

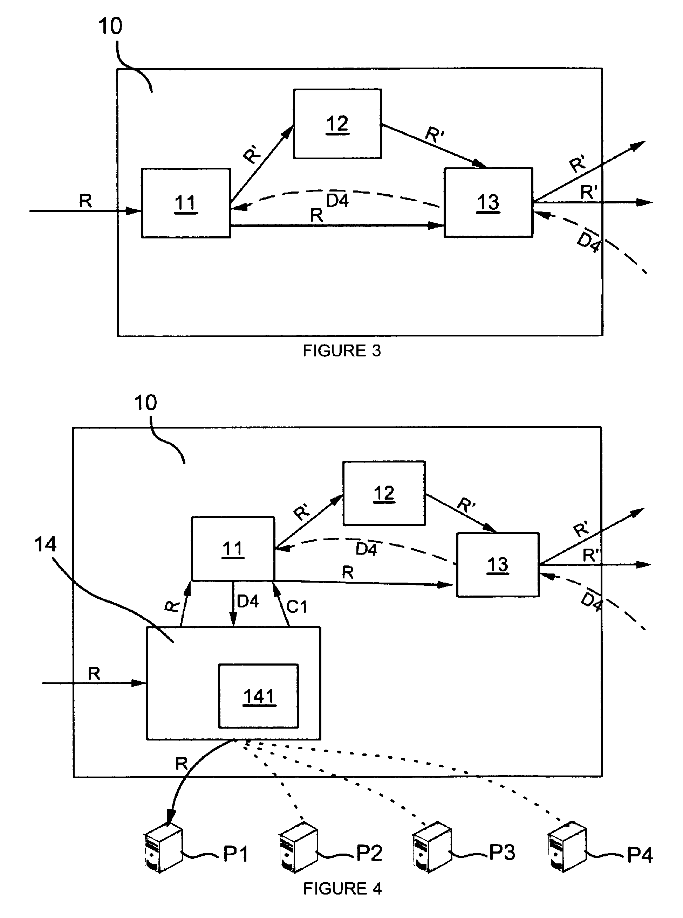

Dans une autre forme de réalisation, le système comprend un module de personnalisation du conducteur 13 agencé pour filtrer la transmission des requêtes vers les serveurs S1, S2, S3, S4 comme représenté figure 3.

Le module de personnalisation du conducteur 13 est paramétré avec des paramètres préférentiels permettant d'assurer un filtrage et un enrichissement de la requête R émise par le conducteur 1. Par exemple, le module de personnalisation du conducteur 13 comprend un paramètre de préférence des routes côtières.

Toujours en référence à l'exemple précédent, lorsque le conducteur 1 indique dans une requête R, les villes de départ A et d'arrivée B au module de gestion des requêtes 11, le module de personnalisation du conducteur 13 modifie la requête R pour demander, de manière additionnelle, un itinéraire entre les villes A et B passant à proximité de la côte.

De manière similaire, si le module de personnalisation du conducteur 13 comprend un paramètre stipulant que le conducteur 1 n'est intéressé que par les conditions climatiques à proximité des lieux d'altitude élevée, les données ciblées D4 retournées par le serveur S4 sont filtrées par le module de personnalisation 13 afin de n'envoyer au serveur météorologique S3 que les données géographiques dont l'altitude est supérieure au paramètre de préférence du conducteur 1 (figure 3).

Ainsi, le module de personnalisation 13 permet de fournir des informations plus précises au conducteur 1 mais permet également d'empêcher la transmission de données vers des serveurs de fourniture de service S1-S3 pour lesquels le conducteur 1 n'a pas d'intérêt. En référence à la figure 3, le module de personnalisation du conducteur 13 ne transmet pas de données issues de la requête R au serveur de fourniture de service S1.

Il va de soi que les modules de gestion des requêtes 11, d'analyse des requêtes 12 et de personnalisation 13 peuvent être regroupés au sein d'un seul et unique module.

Les paramètres préférentiels peuvent être rentrés manuellement via le téléphone mobile 100 du conducteur 1 ou extraits lors de l'analyse de la requête R. Ainsi, si un conducteur 1 requiert de nombreuses fois un itinéraire puis un état des conditions climatiques en altitude, on stocke dans une base de données de personnalisation un paramètre de préférence couplant chaque requête d'itinéraire avec une requête des conditions météorologiques correspondantes. Ainsi, il suffit au conducteur 1 d'indiquer le nom des villes A et B pour obtenir directement un itinéraire avec les conditions météorologiques en altitude sur son parcours.

En référence à la figure 4, le système de l'invention comprend ici un unique module d'identification 14 permettant de vérifier si le conducteur 1 est bien autorisé à accéder aux serveurs de fourniture de service S1-S4 auxquels la requête R peut être adressée. Ainsi, chaque serveur de fourniture de service S1-S4 ne nécessite pas un module d'identification propre.

Le module d'identification 14 comprend une base de données d'identification comprenant le nom des serveurs de fournitures de service S1-S4 auxquels le conducteur 1 a souscrit, ainsi que les codes d'identification et les mots de passe desdits serveurs S1-S4. Ainsi, lorsque le conducteur 1 requiert un service, il ne réalise qu'une seule étape d'identification auprès du serveur d'administration 10, le module d'identification 14 se chargeant de faire identifier, de manière individuelle, la requête R pour chaque serveur de fourniture de service S1-S4 concerné.

Ainsi, dans un exemple de mise en oeuvre, le conducteur 1 envoie la requête d'itinéraire R au serveur d'administration 10, le module d'identification 14 l'invitant à fournir ses informations d'identification, dans le cas présent, un identifiant et un mot de passe. Après vérification et confirmation des informations d'identification, les données d'identification, stockées dans la base de données, sont envoyées aux serveurs météorologiques S3 et de navigation S4, auxquels le conducteur 1 a souscrit. Le conducteur 1 peut ainsi, de manière avantageuse, accéder aux services de manière rapide en réalisant un minimum de manipulations avec son téléphone 100.

Le module d'identification 14 comprend avantageusement un module de facturation 141 afin que le conducteur 1 puisse accéder aux services de manière centralisée. La base de données d'identification comprend, en outre des informations d'identification, des données de facturation du conducteur 1. Ainsi, pour un service donné, la base de données comprend des données de facturation du conducteur 1 telles qu'un code client, une adresse de facturation et une adresse de livraison.

Le module de facturation 141 permet de centraliser toutes les transactions entre le téléphone mobile 100 et les différents serveurs de fourniture de service S1-S4.

Le module d'identification et de facturation 14, situé dans le serveur d'administration 10, reçoit la requête R du téléphone mobile 100 et l'analyse pour vérifier si le conducteur 1 est abonné et s'il peut accéder au service payant. Après vérification, la requête R est transmise au module de gestion des requêtes 11 comme représenté sur la figure 4.

Lorsqu'une requête R, issue du téléphone mobile 100 et destinée à un serveur de fourniture de service S4 auquel le conducteur 1 n'a pas souscrit, est reçue par le module d'identification et de facturation 14, elle est mise en relation avec des serveurs de fourniture de service de participation P1-P4, dits serveurs de participation P1-P4 et représentés sur la figure 4.

Lesdits serveurs de participation P1-P4, qui peuvent également être des serveurs de fourniture de service S1-S4, interviennent auprès du module d'identification et de facturation 14 afin de prendre à leur charge le coût d'accès au service S4 auquel le conducteur 1 n'a pas souscrit. Ainsi, lorsque le conducteur 1 veut accéder au service de navigation payant S4, la requête R est analysée par le module d'identification et de facturation 14. Dans la base de données d'identification et de facturation, on vérifie s'il existe un identifiant d'un serveur de participation P1-P4 susceptible de prendre à sa charge le coût de l'accès au service S4. Si tel est le cas, le module d'identification et de facturation 14 envoie au téléphone mobile 100 une demande d'autorisation de participation provenant du serveur de participation P1.

En cas de refus de l'invitation de la part du conducteur 1, celui-ci envoie une requête R via son téléphone mobile 100 au module d'identification et de facturation 14. Le serveur de participation P1 demeure inactif et le conducteur 1 doit entrer des données de facturation afin d'accéder au serveur de fourniture de service payant S4.

En cas d'acceptation de la part du conducteur 1 de l'offre de participation, le module de facturation 14 facture le service du serveur de fourniture de service S4 au serveur de participation P1. La requête R du conducteur 1 est transmise au serveur de fourniture de service S4 qui retourne des données ciblées D4, les données ciblées D4 ainsi que la requête originale R étant transmises au serveur de participation P1.

Le serveur de participation P1, tel un serveur de fourniture de service non concerné, retourne des données additionnelles participatives C1 au module de gestion des requêtes 11 afin d'enrichir les données ciblées D4.

Toujours en référence à l'exemple précédent, dans lequel le serveur de fourniture de service concerné S4 est un service de navigation S4, le conducteur 1 envoie une requête R pour accéder au service de navigation S4 et reçoit une invitation à utiliser un serveur de participation P1 qui prendra à sa charge le coût de l'accès au service de navigation S4. Le serveur de participation P1 se présente ici comme un serveur d'annonces commerciales fournissant une liste C1 de restaurants et d'hôtels le long de l'itinéraire du conducteur 1.

La liste C1 des restaurants et hôtels, associés à leurs coordonnées graphiques, est envoyée vers le module de gestion 11 pour être ajoutée à l'itinéraire D4 fourni par le service de navigation S4, le conducteur 1 recevant de manière gratuite son itinéraire et bénéficiant, en contrepartie, de propositions commerciales ciblées, les propositions commerciales étant agrégées à l'itinéraire.

Dans un autre exemple de mise en oeuvre de l'invention, la plateforme de télécommunication, située dans un véhicule automobile, se présente sous la forme d'un ordinateur de bord 100 ayant une connexion satellitaire. L'ordinateur de bord 100 est ici relié à un récepteur de données GPS (Global Positioning System) permettant de donner la position du véhicule en coordonnées GPS (latitude, longitude).

L'ordinateur de bord 100 envoie une requête R au serveur d'administration 10 en intégrant à la requête R les coordonnées GPS du véhicule. Ainsi, en indiquant uniquement le nom d'une ville à l'aide de l'ordinateur de bord 100, le conducteur 1 peut requérir l'itinéraire entre ses coordonnées GPS actuelles et la ville de destination.

Le système d'agrégation de service permet d'obtenir des informations de service en prélevant de manière automatique des informations du véhicule en ne nécessitant qu'un minimum de manipulations de l'ordinateur de bord 100.

Il va de soi que l'ordinateur de bord 100 peut transmettre, en outre des coordonnées GPS, le niveau de carburant ou la pression des pneus.

L'invention a été présentée pour une plateforme de télécommunication mobile 100 se présentant sous la forme d'un téléphone mobile ou d'un ordinateur de bord. Il pourrait s'agir de tout autre appareil, désignés classiquement sous la dénomination « clients », adaptés pour se connecter à des serveurs de fourniture de service, comme par exemple un assistant personnel de données, un système embarqué communiquant ou un récepteur GPS communiquant. L'invention pourrait également concerner une plateforme de télécommunication fixe tel qu'un ordinateur personnel, avec lequel un utilisateur enverrait des requêtes depuis son ordinateur afin d'obtenir, par exemple, un itinéraire entre deux lieux avec des données additionnelles.

## Revendications

1. Système d'agrégation de services pour une plateforme de télécommunication (100) comprenant :
- un serveur (10) d'administration de données relié à des serveur (S1, S2, S3, S4) de fourniture de données de service, l'ensemble des serveurs (10, S1, S2, S3, S4) formant une étoile comprenant un centre formé par le serveur d'administration (10) et des branches formées entre le serveur d'administration (10) et les serveurs de fourniture de données de service (S1, S2, S3, S4);
- ledit serveur d'administration (10) comprenant un module (11) de gestion des requêtes agencé pour recevoir des requêtes (R) issues de la plateforme de télécommunication (100) et les transmettre au serveur de fourniture de données de service concerné (S4) auquel les requêtes (R) sont destinées, ledit serveur de fourniture de données de service concerné (S4) fournissant en réponse aux requêtes (R) des données ciblées (D4);
- ledit serveur d'administration (10) comprenant un module (12) d'analyse des requêtes, recevant les données ciblées (D4) et les requêtes (R) du module de gestion des requêtes (11) et transmettant l'ensemble des données (D4, R) à des serveurs de fourniture de données de service non concernés (S1, S2, S3) auxquels les requêtes (R) ne sont pas destinées,
- lesdits serveurs non concernés (S1, S2, S3) fournissant en réponse des données additionnelles (D1, D2, D3) qui sont agrégées par le module de gestion des requêtes (11), l'ensemble des données (D1, D2, D3, D4) étant ensuite transmis à la plateforme de télécommunication (100) par le module de gestion des requêtes (11).

2. Système d'agrégation de services selon la revendication 1, dans lequel lesdits serveurs non concernés (S1, S2, S3) sont agencés pour filtrer les données ciblées (D4) reçues afin d'en extraire les paramètres pour lesquels les serveurs non concernés (S1, S2, S3) peuvent fournir des données additionnelles (D1, D2, D3) en réponse.

3. Système d'agrégation de services selon l'une des revendications 1 à 2, dans lequel le module de gestion des requêtes (11) est agencé pour intégrer les données additionnelles (D1, D2, D3) aux données ciblées (D4) afin d'enrichir les données ciblées.

4. Système d'agrégation de services selon l'une des revendications 1 à 3, dans lequel le serveur d'administration (1) comprend un module de personnalisation du conducteur (13) agencé pour filtrer et enrichir la transmission des requêtes vers les serveurs (S1, S2, S3, S4) et lui proposer ainsi des service préférentiels.

5. Système d'agrégation de services selon la revendication 4, dans lequel le module de personnalisation du conducteur (13) comprend une base de données de paramètres préférentiels.

6. Système d'agrégation de services selon la revendication 5, dans lequel le module de personnalisation du conducteur (13) extrait les paramètres préférentiels des requêtes (R) pour les stocker dans la base de données de paramètres préférentiels.

7. Système d'agrégation de services selon la revendication 1, dans lequel le serveur d'administration (10) comprend un module d'identification (14) permettant de contrôler l'accès aux différents serveurs de fourniture de service (S1-S4).

8. Système d'agrégation de services selon la revendication 7, dans lequel le module d'identification (14) comprend un module de facturation (141) permettant de contrôler la facturation des différents serveurs de fourniture de service (S1-S4).

9. Système d'agrégation de services selon la revendication 8, dans lequel le module de facturation (141) est mis en relation avec un serveur de fourniture de service de participation (P1-P4) agencé pour prendre à sa charge le coût d'accès à un serveur de fourniture de service (S4).

10. Système d'agrégation de services selon la revendication 9, dans lequel le module de gestion des requêtes (11) envoie les données additionnelles (D4), retournées par le serveur de fourniture de service (S4), au serveur de fourniture de service de participation (P1-P4).

11. Système d'agrégation de services selon la revendication 10, dans lequel le serveur de fourniture de service de participation (P1-P4) retourne des données ciblées participatives (C1) qui sont agrégées par le module de gestion des requêtes (11).

12. Système d'agrégation de services selon la revendication 11, dans lequel les données ciblées participatives (C1) sont des données commerciales.

13. Système d'agrégation de services selon l'une des revendications 1 à 12, dans lequel la plateforme de télécommunication (100) est une plateforme mobile.
